# EUROPÄISCHE PATENTSCHRIFT

(11) **EP 0 898 656 B1**
(45) Veröffentlichungstag und Bekanntmachung des Hinweises auf die Patenterteilung: **29.08.2001**
(21) Anmeldenummer: 97922957.2
(22) Anmeldetag: 05.05.1997
(51) Int. Cl.: F16B 12/24, F16B 5/00, E04B 1/48, A47B 96/20

(54) **VORRICHTUNG ZUM VERBINDEN VON BAUTEILEN**
DEVICE FOR CONNECTING STRUCTURAL COMPONENTS
DISPOSITIF POUR ASSEMBLER DES ELEMENTS CONSTITUTIFS

(30) Priorität: 06.05.1996 DE 29608207 U
(43) Veröffentlichungstag der Anmeldung: 03.03.1999
(73) Patentinhaber: Josef Langegger Tischlerei und Möbelhandel, 5753 Saalbach 571 (AT)
(72) Erfinder: LANGEGGER, Josef, A-5753 Saalbach 571 (AT)
(74) Vertreter: Haft, von Puttkamer, Berngruber, Czybulka
(86) Internationale Anmeldenummer: EP9702273
(87) Internationale Veröffentlichungsnummer: WO9742420

(56) Entgegenhaltungen:
- EP-A- 0 566 134
- DE-U- 8 610 592
- GB-A- 1 189 485
- US-A- 3 760 547
- US-A- 3 826 053

## Beschreibung

Die Erfindung bezieht sich auf eine Vorrichtung zum Verbinden von zwei aufeinanderstoßenden Bauteilen gemäß dem Oberbegriff des Anspruchs 1.

Eine derartige Vorrichtung ist aus EP-A-0 566 134 bekannt. Die Rippen beider leistenförmigen Abschnitte sind dabei parallel angeordnet. Wenn die Vorrichtung mit ihrem einen bzw. anderen leistenförmigen Abschnitt in die eine bzw. andere Nut der zu verbindenden Bauteile gesteckt wird, können sich die widerhakenförmigen Rippen an ihren Spitzen etwas aufrichten, insbesondere wenn die Vorrichtung aus Kunststoff oder dgl. elastischen Material besteht. Dadurch können sich die beiden Bauteile etwas auseinanderbewegen, wodurch ein entsprechender Spalt zwischen den zu verbindenden Bauteilen entsteht.

Dies ist auch nach DE 86 10 592 U1 der Fall, wonach die beiden leistenförmigen Abschnitte mit einem Fuß versehen und die beiden Füße mit einem Filmscharnier miteinander verbunden sind. Sie können damit rechtwinklig aufgeklappt mit den widerhakenartigen Leisten in entsprechende Nuten in den Ecken des Hohlbalkens gesteckt werden.

Wenn beispielsweise zwei Holzteile an ihrem Stoß verleimt werden sollen, werden sie im allgemeinen mit Dübeln verbunden, also mit bolzenförmigen Verbindungsstücken aus Holz, die zur Erhöhung der Leimfähigkeit mit Längsrillen versehen sind. Damit die beiden Holzteile beim Aushärten des Leims fest aneinandergepreßt sind, werden Zwingen oder dgl. Spanneinrichtungen verwendet.

In vielen Fällen ist der Einsatz von Zwingen jedoch nicht möglich, beispielsweise, wenn die beiden Holzteile keinen rechten Winkel einschließen oder bei bestimmten Montagesituationen, beispielsweise der Befestigung eines Holzteils an einer Holzdecke.

Aufgabe der Erfindung ist es, eine Vorrichtung bereitzustellen, mit der Bauteile, insbesondere Holzbauteile, an ihren Stoßflächen ohne Zwingen oder dgl. Spanneinrichtungen fest aneinandergepreßt werden können.

Dies wird mit der im Anspruch 1 gekennzeichneten Vorrichtung erreicht. In den Unteransprüchen sind vorteilhafte Ausgestaltungen der Erfindung wiedergegeben.

Die erfindungsgemäße Vorrichtung dient in erster Linie zum Verbinden von zwei an ihrer Stoßfläche miteinander zu verleimenden Holzbauteilen. Sie kann jedoch auch zum Verbinden von Bauteilen aus Metall, Kunststoff oder anderen Werkstoffen verwendet werden.

Nachstehend ist die Erfindung anhand der Zeichnung beispielsweise näher erläutert.

Darin zeigen:
- Fig. 1: eine perspektivische Ansicht einer ersten Ausführungsform der Vorrichtung;
- Fig. 2: eine perspektivische Ansicht von zwei Bauteilen, die mit der Vorrichtung nach Fig. 1 aneinander befestigt werden;
- Fig. 3: eine Draufsicht auf eine zweite Ausführungsform der Vorrichtung; und
- Fig. 4: einen Schnitt entlang der Linie III-III in Fig. 3.

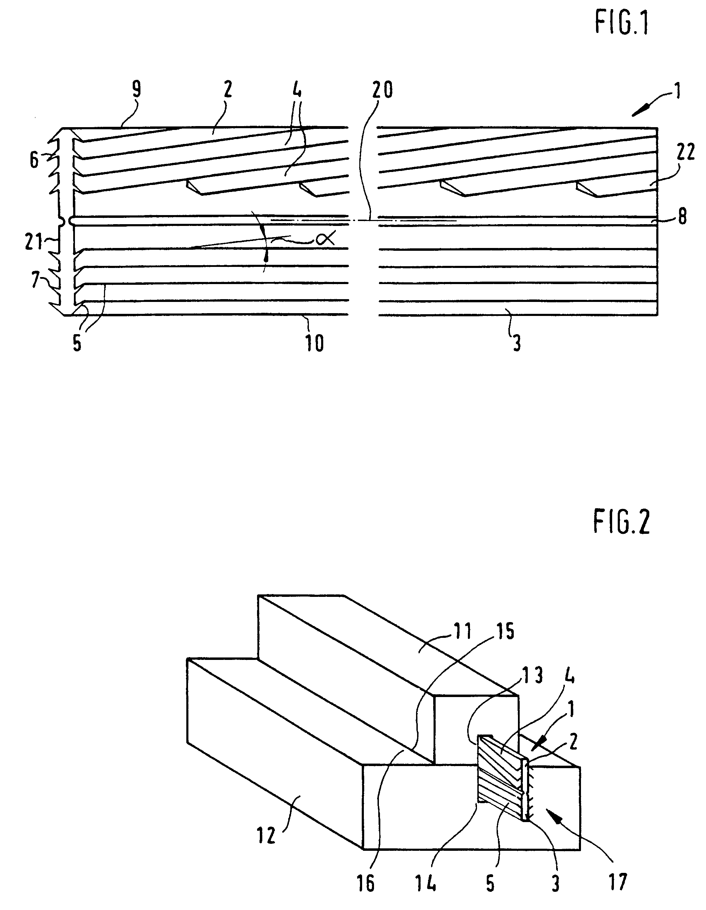

Gemäß Fig. 1 weist die Vorrichtung 1 zwei leistenförmige Abschnitte 2, 3 auf, die an ihren einander zugewandten Längsschmalseiten über ein Gelenk 8 miteinander verbunden sind. Sie weist damit die Form einer rechteckigen Platte auf.

Jeder Abschnitt 2, 3 ist jeweils mit mehreren im Querschnitt widerhakenförmigen Rippen 4, 5 versehen. Die Spitzen 6 der widerhakenförmigen Rippen 4 des Abschnitts 2 sind den Spitzen 7 der widerhakenförmigen Rippen 5 des Abschnitts 3 zugewandt.

Die Vorrichtung 1 ist einstückig ausgebildet, vorzugsweise aus Kunststoff. Das Gelenk 8 wird dabei durch ein Filmscharnier gebildet und bildet die Längsachse 20 der Vorrichtung.

Die Rippen 5 des Abschnitts 3 verlaufen parallel zu dessen Längskante 10, also parallel zur Längsachse 20 zwischen den beiden leistenförmigen Abschnitten 2, 3 bzw. senkrecht zu den Seitenkanten 21, 22. Demgegenüber verlaufen die Rippen 4 des Abschnitts 2 zwar auch parallel zueinander, aber schräg zur Längsachse 20 bzw. Längskante 9 des Abschnitts 2, und zwar mit einem Winkel von ca. 7°. Das heißt, die Rippen 4 und die Rippen 5 schließen einen Winkel α ein, der normalerweise zwischen 2° und 20° liegen kann.

Gemäß Fig. 2 werden zum Verbinden von zwei Holzteilen 11, 12, die verleimt werden sollen, zwei Nuten 13, 14 in deren Stoßflächen 15, 16 gefräst. Die Nuten 13, 14 weisen eine Breite auf, die etwas geringer ist als die Breite der Abschnitte 2, 3, einschließlich der Rippen 4, 5.

Die Bauteile 11, 12 können jetzt so angeordnet werden, dass die Nuten 13, 14 miteinander fluchten, worauf die Vorrichtung 1 von der Seite so eingesteckt wird, dass der eine Abschnitt 2 in die Nut 13 und der andere Abschnitt 3 in die Nut 14 eindringt. Dabei liegen die widerhakenartigen Rippen 4, 5 reibschlüssig, und wenn sie in das Holz eindringen auch formschlüssig, an den Seitenflächen der Nuten 13, 14 an.

Durch einen Schlag auf die Stirnfläche der Vorrichtung 1 gemaß dem Pfeil 17 wird, da die Rippen 4 an dem Abschnitt 2 sich in die Nut 13 nach innen schrag vom Bauteil 12 wegerstrecken, das Bauteil 11 an das Bauteil 12 gezogen und damit ein spaltfreier Stoß gebildet. Ein etwaiger aus den Nuten 13, 14 seitlich vorstehender Teil der Vorrichtung 1 kann dann abgetrennt werden.

Die Verbindung kann auch in anderer Weise erfolgen, beispielsweise dadurch, dass die Vorrichtung 1 mit dem einen Abschnitt 3 erst in die Nut 14 von der Seite oder von oben eingeführt wird, worauf das Bauteil 12 mit der Nut 13 seitlich auf den aus der Nut 12 ragenden Abschnitt 2 geschoben wird.

Nach Fig. 1 liegen die Nuten 13, 14 in den Bauteilen 11 und 12 in einer Ebene. Durch das Filmscharnier 8 können die Nuten der miteinander zu verbindenden Bauteile jedoch auch jeden anderen beliebigen Winkel einschließen. Selbstverständlich können auch die miteinander zu verbindenden Bauteile mit jedem anderen beliebigen Winkel aufeinanderstoßen.

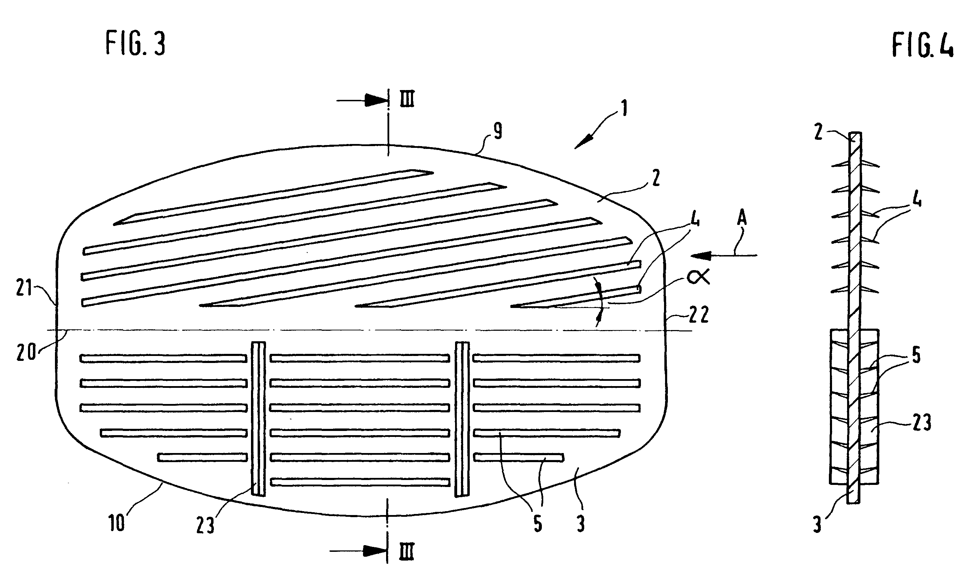

Die Ausführungsform nach Fig. 3 und 4 unterscheidet sich von der nach Fig. 1 und 2 im wesentlichen dadurch, dass zwischen den parallel zur Längsachse 20 der Vorrichtung 1 verlaufenden Rippen 5 des einen Abschnitts 3 im Abstand voneinander rippenförmige Stabilisatoren 23 angeordnet sind. Die Stabilisatoren 23 verlaufen senkrecht zu den Rippen 5 bzw. der Längsachse 20. Sie weisen einen Vorstand auf, der dem Vorstand der Rippen 5 entspricht (Fig. 4).

Darüberhinaus ist bei dieser Ausführungsform zwischen den Abschnitten oder Hälften 2, 3 der Vorrichtung 1 kein Gelenk vorgesehen. Das heißt, das Plättchen 1 ist im wesentlichen steif ausgebildet. Zudem sind die Längskanten 9, 10 konvex gekrümmt und symmetrisch zur Längsachse 20 ausgebildet.

Zum Verbinden zweier Bauteile wird der Abschnitt 3 mit den zur Längsachse 20 parallel verlaufenden Rippen 5 und den Stabilisatoren 23 senkrecht zur Stoßfläche in die Nut des ersten Bauteils gesteckt. Dann wird der zweite Abschnitt 3 mit den schrägen Rippen 4 in die Nut des zweiten Bauteils senkrecht zur Stoßfläche gesteckt. Durch einen Schlag auf das zweite Bauteil in Richtung des Pfeiles A (oder auf das erste Bauteil in der Gegenrichtung), wird das zweite Bauteil gegen das erste Bauteil gezogen, so dass die beiden Bauteile mit ihren Stoßflächen aneinanderliegen.

Die Stabilisatoren 23 schneiden mit ihrer Kante in das erste Bauteil und verhindern während des Schlags auf das zweite Bauteil, dass sich das Plättchen 1 im ersten Bauteil verschiebt.

## Patentansprüche

1. Vorrichtung zum Verbinden von zwei aufeinanderstoßenden Bauteilen (11, 12) mit zwei miteinander verbundenen leistenförmigen Abschnitten (2, 3) zum Einführen in eine Nut (13) in dem einen bzw. in eine Nut (14) in dem anderen Bauteil (11, 12), wobei die leistenförmigen Abschnitte (2, 3) jeweils mit mehreren im Querschnitt widerhakenförmigen Rippen (4, 5) versehen sind und die Spitzen (6, 7) der widerhakenförmigen Rippen (4, 5) der beiden Abschnitte (2, 3) einander zugewandt sind, **dadurch gekennzeichnet**, dass die Rippen (5) des einen Abschnitts (3) parallel zur Längsachse (20) der beiden Abschnitte (2, 3) und die Rippen (4) des anderen Abschnitts (2) schräg zur Längsachse (20) verlaufen.

2. Vorrichtung nach Anspruch 1, **dadurch gekennzeichnet**, dass die Rippen (4) des anderen Abschnitts (2) in einem Winkel (α) von höchstens 20° zu der Längsachse (20) verlaufen.

3. Vorrichtung nach Anspruch 1 oder 2, **dadurch gekennzeichnet**, dass jeweils innerhalb eines Abschnitts (2,3) die Rippen (4, 5) parallel zueinander angeordnet sind.

4. Vorrichtung nach einem der vorstehenden Ansprüche, **dadurch gekennzeichnet**, dass die beiden Abschnitte (2, 3) gelenkig miteinander verbunden sind.

5. Vorrichtung nach einem der vorstehenden Ansprüche, **dadurch gekennzeichnet**, dass sie einstückig aus Kunststoff gebildet ist.

6. Vorrichtung nach Anspruch 5 und 6, **dadurch gekennzeichnet**, dass das Gelenk (8) als Filmscharnier ausgebildet ist.

7. Vorrichtung nach Anspruch 4, **dadurch gekennzeichnet**, dass an dem einen Abschnitt (3) zwischen den Rippen (5), die parallel zur Längsachse (20) verlaufen, wenigstens ein senkrecht verlaufender rippenförmiger Stabilisator (23) vorgesehen ist.

## Claims

1. A device for joining two abutting members (11, 12) with two strip-shaped portions (2, 3) that are connected to each other for insertion into a groove (13) in the one member (11, 12) or into a groove (14) in the other member (11, 12), the strip-shaped portions (2, 3) being respectively provided with several ribs (4, 5) with a barb-shaped cross-section and the tips (6, 7) of the barb-shaped ribs (4, 5) of the two portions (2, 3) facing each other, **characterized in that** the ribs (5) of the one portion (3) extend in parallel to the longitudinal axis (20) of the two portions (2, 3) and the ribs (4) of the other portion (2) extending obliquely to the longitudinal axis (20) .

2. A device according to claim 1, **characterized in that** the ribs (4) of the other portion (2) extend at an angle (α) of 20° at the maximum to the longitudinal axis (20).

3. A device according to claim 1 or 2, **characterized in that** the ribs (4, 5) of each portion (2, 3) are positioned parallel to each other.

4. A device according to any of the preceding claims, **characterized in that** the two portions (2, 3) are connected to each other in articulated fashion.

5. A device according to any of the preceding claims, **characterized in that** it is formed in one piece of plastic material.

6. A device according to claims 5 and 6, **characterized in that** the articulation (8) is formed as a film hinge.

7. A device according to claim 4, **characterized in that** at least one vertically extending rib-shaped stabilizer (23) is provided on the one portion (3) between the ribs (5) that extend parallel to the longitudinal axis (20).

## Revendications

1. Dispositif pour assembler deux éléments constitutifs (11, 12) aboutés l'un contre l'autre comprenant deux tronçons (2, 3) en forme de lattes, reliés l'un à l'autre, à introduire dans une gorge (13) ménagée dans l'un des éléments constitutifs (11, 12) et dans une gorge (14) ménagée dans l'autre élément constitutif, les tronçons (2, 3) en forme de lattes étant chacun pourvus de plusieurs nervures (4, 5) à section en forme de crochets, et les pointes (6, 7) des nervures (4, 5) en forme de crochets des deux tronçons (2, 3) étant tournées les unes vers les autres, **caractérisé en ce que** les nervures (5) du tronçon (3) s'étendent parallèlement à l'axe longitudinal (20) des deux tronçons (2, 3) et les nervures (4) de l'autre tronçon (2) s'étendant en oblique par rapport à l'axe longitudinal (20).

2. Dispositif selon la revendication 1, **caractérisé en ce que** les nervures (4) de l'autre tronçon (2) s'étendent sous un angle (α) de 20° au plus par rapport à l'axe longitudinal (20).

3. Dispositif selon la revendication 1 ou 2, **caractérisé en ce qu**'à l'intérieur de chaque tronçon (2, 3), les nervures (4, 5) sont agencées en parallèle les unes par rapport aux autres.

4. Dispositif selon l'une quelconque des revendications précédentes, **caractérisé en ce que** les deux tronçons (2, 3) sont reliés l'un à l'autre de manière articulée.

5. Dispositif selon l'une quelconque des revendications précédentes, **caractérisé en ce qu**'il est formé d'une seule pièce en matière plastique.

6. Dispositif selon les revendications 5 et 6, **caractérisé en ce que** l'articulation (8) est réalisée sous forme de charnière à bande.

7. Dispositif selon la revendication 4, **caractérisé en ce que** sur le tronçon (3) entre les nervures (5) qui s'étendent parallèlement à l'axe longitudinal (20), il est prévu au moins un stabilisateur (23) perpendiculaire, en forme de nervure.
